# FASCICULE DE BREVET EUROPEEN

(11) **EP 3 803 092 B1**
(45) Date de publication et mention de la délivrance du brevet: **20.11.2024**
(21) Numéro de dépôt: 19728635.4
(22) Date de dépôt: 29.05.2019
(51) Int. Cl.: F02M 25/022, F02M 25/025, C02F 1/00, C02F 1/42

(54) **SYSTÈME D'INJECTION D'UNE SOLUTION AQUEUSE DANS UN MOTEUR À INJECTION**
EINSPRITZSYSTEM EINER WÄSSERIGEN LÖSUNG IN EINEM VERBRENNUNGSMOTOR
INJECTION SYSTEM OF AN AQUEOUS SOLUTION IN AN ENGINE

(30) Priorité: 30.05.2018 FR 1854644
(43) Date de publication de la demande: 14.04.2021
(73) Titulaire: Plastic Omnium Advanced Innovation And Research, 1130 Bruxelles (BE)
(72) Inventeur: LEONARD, Stéphane, 1090 BRUXELLES (BE); DUEZ, Laurent, 1180 UCCLE (BE)
(74) Mandataire: LLR
(86) Numéro de dépôt international: PCT/EP2019/064101
(87) Numéro de publication internationale: WO 2019/229186

(56) Documents cités:
- WO-A1-2016/177556
- WO-A1-2016/177561
- WO-A1-2017/137100
- DE-A1- 102014 222 471
- US-A1- 2005 109 703
- US-A1- 2006 266 307

## Description

### 1. Domaine de l'invention

L'invention concerne un système d'injection d'une solution aqueuse dans un moteur à injection pour véhicule automobile et un procédé de déminéralisation d'une solution aqueuse dans un système d'injection de ladite solution aqueuse dans un moteur à injection pour véhicule automobile. Plus particulièrement, l'invention concerne un système d'injection d'une solution aqueuse dans un moteur à injection pour véhicule automobile comprenant un moyen de déminéralisation de la solution aqueuse.

L'invention peut être utilisée notamment à bord des véhicules automobiles comprenant un moteur à injection à essence, plus particulièrement à bord des véhicules automobile comprenant un moteur à injection à essence turbocompressé.

### 2. Solutions de l'art antérieur

Il est connu d'injecter de l'eau dans le circuit d'admission d'air du moteur. Cette eau se mélange au gaz d'admission et permet de réduire les températures de combustion et les émissions de polluants appelés NOx, et d'augmenter les performances, par exemple, d'un moteur à essence en diminuant la sensibilité au cliquetis. Un tel système d'injection est décrit dans le document de brevet FR2801076A1.

Cependant, pour assurer le bon fonctionnement d'un système d'injection traditionnel, il est connu de remplir le réservoir de stockage avec de l'eau déminéralisée afin de ne pas boucher le circuit d'injection avec du tartre. Ceci n'est pas satisfaisant. En effet, remplir le réservoir avec de l'eau déminéralisée est contraignant. L'utilisateur d'un véhicule automobile équipé d'un tel système d'injection doit prendre avec lui des bidons d'eau déminéralisée quand il part en voyage car il faut prévoir environ 3 litres d'eau déminéralisée pour 1000 kilomètres parcourus. Certes, on peut acheter de l'eau déminéralisée dans les stations-service, mais l'utilisateur n'en trouvera pas dans toutes les stations-service.

Le document US2006/0266307 décrit un système d'injection d'eau pour moteur Diesel équipé d'un élément de purification de l'eau provenant d'un réservoir d'eau, avant son injection.

Le document WO2017/137100 A1 décrit un système d'injection d'une solution aqueuse dans un moteur à injection pour véhicule automobile comprenant un moyen de déminéralisation situé entre le réservoir et au moins un injecteur, ledit système comprenant un circuit de circulation complexe de la solution aqueuse.

### 3. Objectifs de l'invention

L'invention a notamment pour objectif de pallier ces inconvénients de l'art antérieur.

Plus précisément, un objectif de l'invention, dans au moins un de ses modes de réalisation, est de fournir un système d'injection d'une solution aqueuse dans un moteur à injection pour véhicule automobile comprenant un circuit de circulation simplifié de la solution aqueuse.

Un autre objectif de l'invention, dans au moins un de ses modes de réalisation, est de mettre en oeuvre un procédé de déminéralisation d'une solution aqueuse dans un système d'injection de ladite solution aqueuse dans un moteur à injection pour véhicule automobile.

### 4. Exposé de l'invention

L'invention concerne un système d'injection d'une solution aqueuse dans un moteur à injection pour véhicule automobile comprenant un réservoir, un moyen d'injection de la solution aqueuse laquelle est injectée dans une conduite connectant le réservoir à au moins un injecteur, ladite conduite comprenant un moyen de déminéralisation de la solution aqueuse.

Selon l'invention, ledit système d'injection d'une solution aqueuse dans un moteur à injection pour véhicule automobile est tel que le moyen d'injection est également un moyen d'aspiration vers le réservoir de la solution aqueuse dans la conduite connectant le réservoir à au moins un injecteur et est tel que ladite conduite comprend un dispositif de caractérisation de la solution aqueuse permettant en fonction des caractéristiques de la solution aqueuse d'injecter ou d'aspirer la solution de la conduite, ledit dispositif de caractérisation étant situé entre le moyen de déminéralisation et le au moins un injecteur et/ou entre le moyen de déminéralisation et le moyen d'injection et d'aspiration de la solution aqueuse, préférentiellement entre le moyen de déminéralisation et le au moins un injecteur.

Le principe général de l'invention repose sur l'utilisation d'un moyen d'injection et également d'aspiration de la solution aqueuse dans la conduite connectant le réservoir à au moins un injecteur mais également sur la présence d'un dispositif de caractérisation de la solution aqueuse permettant en fonction des caractéristiques de la solution aqueuse d'injecter ou d'aspirer la solution de la conduite.

Ainsi, l'invention repose sur une approche tout à fait nouvelle et inventive d'un système d'un système d'injection d'une solution aqueuse dans un moteur à injection pour véhicule automobile. Le système selon l'invention permettant d'injecter dans le moteur une solution aqueuse déminéralisée et ledit système présentant une circulation de la solution aqueuse la plus simplifiée possible. Par l'expression « circulation de la solution aqueuse la plus simplifiée possible », on entend désigner le fait que le système d'injection est dépourvu d'une seconde conduite entre le réservoir et le au moins un injecteur permettant le retour de la solution aqueuse dans le réservoir. Par l'expression « solution aqueuse déminéralisée », on entend désigner une solution aqueuse ayant une conductivité inférieure à 50 µS/cm à 20°C. Le moyen d'injection et d'aspiration de la solution aqueuse peut comprendre au moins deux pompes, l'une fonctionnant en mode injection et l'autre fonctionnant en mode aspiration. Préférentiellement, le moyen d'injection et d'aspiration de la solution aqueuse est une pompe à mouvement réversible.

Selon l'invention, le dispositif de caractérisation comprend au moins un capteur de qualité apte à mesurer une caractéristique de la solution aqueuse, cette caractéristique étant la conductivité électrique de la solution aqueuse et/ou son impédance. Le dispositif de caractérisation comprend également une unité de contrôle électronique (ECU) permettant de contrôler les données provenant du moyen de caractérisation et d'enclencher en fonction de celles-ci différentes actions telles qu'un arrêt du moyen d'injection et d'aspiration, un fonctionnement du moyen d'injection et d'aspiration en mode injection, un fonctionnement du moyen d'injection et d'aspiration en mode aspiration ou bien d'envoyer un signal signalant que le moyen de déminéralisation doit être vérifié voir remplacé.

Ainsi, un tel dispositif de caractérisation permet de détecter l'épuisement (ou l'usure) du moyen de déminéralisation. Par les termes « épuisement (ou usure) du moyen de déminéralisation », on entend désigner le fait que la mesure de la caractéristique de la solution aqueuse, préférentiellement de la conductivité électrique de la solution aqueuse et/ou son impédance, ne varie pas avant et après passage au travers du moyen de déminéralisation par injection et/ou aspiration. Plus particulièrement, par les termes « épuisement (ou usure) du moyen de déminéralisation », on entend désigner le fait que la valeur de la mesure de la caractéristique de la solution aqueuse après passage au travers du moyen de déminéralisation est supérieur à une valeur seuil, plus spécifiquement, ladite valeur seuil est par exemple 50 µS/cm dans le cas d'une mesure de conductivité électrique.

Selon un mode de réalisation préférentiel, le système d'injection selon l'invention est tel que le moyen de déminéralisation de la solution aqueuse est amovible.

Ainsi, un tel moyen de déminéralisation de la solution aqueuse amovible permet d'effectuer la maintenance du moyen de déminéralisation ou le remplacement du moyen de déminéralisation.

Selon un mode de réalisation préférentiel du mode précédent, le système d'injection selon l'invention est tel qu'il comprend un moyen permettant d'éviter un écoulement de la solution aqueuse lorsque le moyen de déminéralisation de la solution aqueuse est retiré de la conduite connectant le réservoir à au moins un injecteur. Ledit moyen permettant d'éviter un écoulement de la solution aqueuse peut être un raccord de type raccord rapide à clapets coniques.

Ainsi lors la maintenance ou du remplacement du moyen de déminéralisation, on évite une perte de la solution aqueuse dans le système d'injection.

Selon un mode de réalisation préférentiel, le système d'injection selon l'invention est tel que le moyen de déminéralisation de la solution aqueuse comprend une résine échangeuse d'ions.

Ainsi un tel moyen de déminéralisation comprenant une résine échangeuse d'ions permet de disposer d'un moyen de déminéralisation simple qui peut en outre être reconditionné. Par l'expression « résine échangeuse d'ions », on entend désigner une résine cationique ou une résine anionique ou un mélange de ces deux types de résines, préférentiellement un mélange de résine cationique et anionique ayant une capacité d'échange supérieure à 330 mEq où mEq représente la quantité en milligrammes, d'un soluté égal à 1/1000 de son poids équivalent en grammes en tenant compte de la valence des ions.

Selon un mode de réalisation préférentiel, le système d'injection selon l'invention est tel que le moyen d'injection et d'aspiration de la solution aqueuse est une pompe à mouvement réversible.

Ainsi, un moyen d'injection et d'aspiration de la solution aqueuse tel qu'une pompe à mouvement réversible permet la purge du circuit hydraulique afin de protéger les injecteurs et la ligne en cas de gel.

Selon un mode de réalisation préférentiel du mode précédent, le système d'injection selon l'invention est tel que le moyen d'injection et d'aspiration est situé à l'intérieur du réservoir.

Ainsi, une pompe située à l'intérieur du réservoir présente l'avantage d'une compacité plus importante du système d'injection d'une part et d'autre part permet également d'offrir une protection de la pompe.

Selon un mode de réalisation préférentiel, le système d'injection selon l'invention est tel que la conduite connectant le réservoir à au moins un injecteur et/ou le moyen de déminéralisation de la solution aqueuse comprend un moyen de chauffage apte à chauffer la solution aqueuse. Préférentiellement, le moyen de chauffage est choisi parmi un moyen de chauffage électrique et/ou un moyen de chauffage comportant un fluide caloporteur tel qu'un liquide de refroidissement du moteur ou un gaz d'échappement en provenance du moteur.

Ainsi, le moyen de chauffage permet le fonctionnement à froid du système d'injection d'eau. Par l'expression « fonctionnement à froid », on entend désigner que le moyen de chauffage va permettre de dégeler l'eau et donc de fonctionner même si la T° ambiante est inférieure à 0°C.

Selon un mode de réalisation particulier, le système d'injection selon l'invention est tel qu'il comprend une ligne « bypass » du moyen de déminéralisation en cas de purge de la conduite connectant le réservoir à au moins un injecteur.

Ainsi, lors d'une purge le moyen de déminéralisation est toujours maintenu sous eau.

Un second objet de l'invention est de fournir un procédé de déminéralisation d'une solution aqueuse dans un système d'injection de ladite solution aqueuse dans un moteur à injection pour véhicule automobile.

Le procédé de déminéralisation d'une solution aqueuse dans un système d'injection de ladite solution aqueuse dans un moteur à injection pour véhicule automobile selon l'invention est tel qu'il comprend les étapes suivantes :
a. Injection de ladite solution aqueuse dans une conduite connectant un réservoir à au moins un injecteur d'un moteur à injection,
b. Déminéralisation de ladite solution par passage au travers d'un moyen de déminéralisation,
c. Mesure d'au moins une caractéristique de la solution aqueuse après passage au travers du moyen de déminéralisation,
d. Si la mesure de la caractéristique de la solution aqueuse est supérieure à une valeur référence, aspiration de la solution aqueuse vers le réservoir ou arrêt de l'injection,
et la caractéristique de la solution aqueuse mesurée est une conductivité électrique et/ou une impédance.

Ainsi, le procédé selon l'invention permet de protéger les injecteurs, le moteur et les catalyseurs contre des dépôts solides tout en optimisant l'utilisation du moyen de déminéralisation et en réduisant la longueur du circuit de circulation de la solution aqueuse.

Selon un mode de mise en oeuvre préféré, le procédé de déminéralisation selon l'invention est tel que les étapes a, b, c, d sont répétées n fois (correspondant à une étape e), avec n un nombre entier, jusqu'à ce que la propriété mesurée soit inférieure ou égale à la valeur référence dans le cas d'une aspiration de la solution aqueuse vers le réservoir. L'espace de temps entre la n^{ième} étape d'injection et la n^{ième} étape d'aspiration est préférentiellement supérieure à 3600 secondes, plus préférentiellement supérieure à 1800 secondes, le plus préférentiellement supérieur à 600 secondes.

Ainsi, le procédé selon l'invention permet de réduire la longueur du circuit de circulation de la solution aqueuse tout en optimisant l'utilisation du moyen de déminéralisation.

Selon un mode de mise en oeuvre préféré, le procédé de déminéralisation selon l'invention est tel que l'étape e) est stoppée si la propriété mesurée est constante entre n-1 et n, ladite propriété étant supérieure à la valeur de référence, le moyen d'injection et d'aspiration est alors arrêté et le moyen de déminéralisation remplacé. Ladite valeur de référence est égale à 50µS/cm dans le cas d'une mesure de conductivité.

L'ensemble des étapes mentionnées précédemment est géré par une unité de contrôle électronique (ECU) permettant de contrôler les données provenant du moyen de caractérisation et d'enclencher en fonction de celles-ci différentes actions telles qu'un arrêt du moyen d'injection et d'aspiration, un fonctionnement du moyen d'injection et d'aspiration en mode injection, un fonctionnement du moyen d'injection et d'aspiration en mode aspiration ou bien d'envoyer un signal signalant que le moyen de déminéralisation doit être vérifié voir remplacé.

Avantageusement, une étape de purge par aspiration de la solution présente dans le moyen de déminéralisation et dans la conduite située entre le moyen de déminéralisation et le au moins un injecteur est effectuée.

L'invention concerne également les véhicules automobile comprenant des systèmes d'injection d'une solution aqueuse dans un moteur à injection tels que décrits précédemment.

### 5. Liste des figures

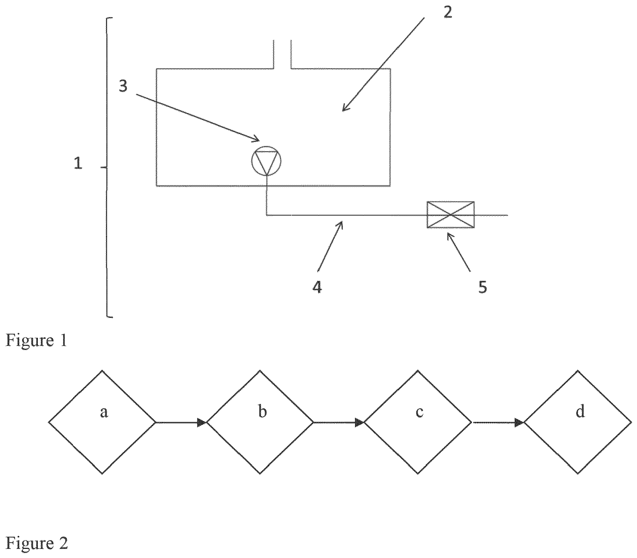

D'autres caractéristiques et avantages de l'invention apparaîtront plus clairement à la lecture de la description suivante d'un mode de réalisation préférentiel, donné à titre de simple exemple illustratif et non limitatif, et des schémas présentés aux figures 1 et 2.
- la figure 1 illustre un système d'injection d'une solution aqueuse dans un moteur à injection pour véhicule automobile selon l'invention.
- La figure 2 illustre de manière schématique un mode de mise en oeuvre du procédé de déminéralisation d'une solution aqueuse dans un système d'injection de ladite solution aqueuse dans un moteur à injection pour véhicule automobile selon l'invention

### 6. Description d'au moins un mode de réalisation de l'invention

On présente, en relation avec la figure 1, un mode de réalisation d'un système d'injection d'une solution aqueuse dans un moteur à injection pour véhicule automobile (1) selon l'invention, ledit système (1) comprenant un réservoir (2), un moyen d'injection de la solution aqueuse (3) dans une conduite (4) connectant le réservoir (2) à au moins un injecteur (non représenté sur la figure) et ladite conduite (4) comprenant un moyen de déminéralisation (5) de la solution aqueuse. Le moyen d'injection (3) est également un moyen d'aspiration de la solution aqueuse dans la conduite (4) connectant le réservoir (2) à au moins un injecteur. Préférentiellement, le moyen d'injection (3) et d'aspiration (3) de la solution aqueuse dans la conduite (4) est une pompe à mouvement réversible, préférentiellement une pompe à mouvement rotatif, la pompe étant préférentiellement située à l'intérieur du réservoir (2). Ladite conduite (4) comprend un dispositif de caractérisation de la solution aqueuse (non représenté sur la figure) permettant en fonction des caractéristiques de la solution aqueuse d'injecter ou d'aspirer la solution de la conduite, ledit dispositif de caractérisation étant situé entre le moyen de déminéralisation (5) et le au moins injecteur et/ou entre le moyen de déminéralisation (5) et le moyen d'injection et d'aspiration (3) de la solution aqueuse, préférentiellement entre le moyen de déminéralisation (5) et le au moins un injecteur. Le dispositif de caractérisation (non représenté) comprend au moins un capteur de qualité (non représenté) apte à mesurer une caractéristique de la solution aqueuse. Préférentiellement, le capteur de qualité est apte à mesurer la conductivité électrique de la solution aqueuse et/ou son impédance. Le moyen de déminéralisation (5) est monté amovible sur la conduite (4) de la solution aqueuse. Préférentiellement, le moyen de déminéralisation (5) comprend une résine échangeuse d'ions, ladite résine étant une résine cationique ou une résine anionique ou un mélange de ces deux types de résines. Préférentiellement la résine échangeuse d'ions est constituée d'un mélange de résine cationique et de résine anionique. Avantageusement, la conduite connectant le réservoir à au moins un injecteur et/ou le moyen de déminéralisation de la solution aqueuse comprend un moyen de chauffage apte à chauffer la solution aqueuse. Préférentiellement, le moyen de chauffage est choisi parmi un moyen de chauffage électrique et/ou un moyen de chauffage comportant un fluide caloporteur tel qu'un liquide de refroidissement du moteur ou un gaz d'échappement en provenance du moteur.

Bien entendu, l'invention n'est pas limitée aux exemples de réalisation mentionnés ci-dessus.

L'invention s'applique également à un procédé de déminéralisation d'une solution aqueuse dans un système d'injection de ladite solution aqueuse dans un moteur à injection pour véhicule automobile. La figure 2 illustre schématiquement un procédé de déminéralisation. Ledit procédé comprend une étape d'injection de la solution aqueuse dans une conduite connectant un réservoir à au moins un injecteur d'un moteur à injection (a). Cette étape d'injection (a) est suivie d'une étape de déminéralisation de la solution par passage au travers d'un moyen de déminéralisation, une mesure d'au moins une caractéristique de la solution aqueuse est ensuite effectuée après passage de la solution aqueuse au travers du moyen de déminéralisation. Si la mesure de la caractéristique de la solution aqueuse est supérieure à une valeur référence, 50 µS/cm dans le cas d'une conductivité électrique, on effectue l'aspiration de la solution aqueuse vers le réservoir ou bien un arrêt de l'injection.

## Revendications

1. Système (1) d'injection d'une solution aqueuse dans un moteur à injection pour véhicule automobile, ledit système comprenant un réservoir (2), un moyen d'injection (3) de la solution aqueuse, ladite solution aqueuse étant injectée dans une conduite (4) connectant le réservoir (2) à au moins un injecteur et ladite conduite (4) comprenant un moyen de déminéralisation (5) de la solution aqueuse,
**caractérisé en ce que**
le moyen d'injection (3) est également un moyen d'aspiration vers le réservoir (2) de la solution aqueuse dans la conduite (4) connectant le réservoir (2) à au moins un injecteur et **en ce que** ladite conduite (4) comprend un dispositif de caractérisation de la solution aqueuse permettant en fonction des caractéristiques de la solution aqueuse d'injecter ou d'aspirer la solution de la conduite (4), ledit dispositif de caractérisation étant situé entre le moyen de déminéralisation (5) et le au moins un injecteur et/ou entre le moyen de déminéralisation (5) et le moyen d'injection et d'aspiration de la solution aqueuse, préférentiellement entre le moyen de déminéralisation (5) et le au moins un injecteur, et
le dispositif de caractérisation comprend au moins un capteur de qualité apte à mesurer la conductivité électrique de la solution aqueuse et/ou son impédance.

2. Système (1) d'injection selon la revendication précédente, tel que le moyen de déminéralisation (5) de la solution aqueuse est amovible.

3. Système (1) d'injection selon une quelconque des revendications précédentes, tel que le moyen de déminéralisation (5) de la solution aqueuse comprend une résine échangeuse d'ions.

4. Système (1) d'injection selon une quelconque des revendications précédentes, tel que le moyen d'injection et d'aspiration de la solution aqueuse est une pompe à mouvement réversible.

5. Système (1) d'injection selon l'une quelconque des revendications précédentes, tel que le moyen d'injection et d'aspiration est situé à l'intérieur du réservoir (2).

6. Système (1) d'injection selon une quelconque des revendications précédentes, tel que la conduite (4) connectant le réservoir (2) à au moins un injecteur et/ou le moyen de déminéralisation (5) de la solution aqueuse comprend un moyen de chauffage apte à chauffer la solution aqueuse.

7. Procédé de déminéralisation d'une solution aqueuse dans un système (1) d'injection de ladite solution aqueuse dans un moteur à injection pour véhicule automobile comprenant les étapes successives suivantes :
a. Injection de ladite solution aqueuse dans une conduite (4) connectant un réservoir (2) à au moins un injecteur d'un moteur à injection,
b. Déminéralisation de ladite solution par passage au travers d'un moyen de déminéralisation (5),
c. Mesure d'au moins une caractéristique de la solution aqueuse après passage au travers du moyen de déminéralisation (5),
d. Si la mesure de la caractéristique de la solution aqueuse est supérieure à une valeur référence, aspiration de la solution aqueuse vers le réservoir (2),
dans lequel la caractéristique de la solution aqueuse mesurée est une conductivité électrique et/ou une impédance.

8. Procédé de déminéralisation d'une solution aqueuse dans un système (1) d'injection de ladite solution aqueuse dans un moteur à injection pour véhicule automobile selon la revendication 7, tel qu'il comprend une étape e. durant laquelle les étapes a, b, c, d sont répétées n fois, avec n un nombre entier, jusqu'à ce que la propriété mesurée soit inférieure ou égale à la valeur référence.

9. Procédé de déminéralisation d'une solution aqueuse dans un système (1) d'injection de ladite solution aqueuse dans un moteur à injection pour véhicule automobile selon la revendication 8; tel que l'étape e) est stoppée si la propriété mesurée est constante entre n-1 et n, ladite propriété étant supérieure à la valeur de référence, le moyen d'injection et d'aspiration est alors arrêté et le moyen de déminéralisation remplacé.

## Patentansprüche

1. System (1) zum Einspritzen einer wässrigen Lösung in einen Einspritzmotor für Kraftfahrzeuge, wobei das System einen Behälter (2) aufweist, ein Mittel zum Einspritzen (3) der wässrigen Lösung, wobei die wässrige Lösung in eine Leitung (4) eingespritzt wird, die den Behälter (2) mit mindestens einer Einspritzvorrichtung verbindet, und wobei die Leitung (4) ein Mittel zur Demineralisierung (5) der wässrigen Lösung aufweist,
**dadurch gekennzeichnet, dass**
das Mittel zum Einspritzen (3) auch ein Ansaugmittel zum Behälter (2) der wässrigen Lösung in der Leitung (4) ist, die den Behälter (2) mit mindestens einer Einspritzvorrichtung verbindet, und dass die Leitung (4) eine Vorrichtung zur Charakterisierung der wässrigen Lösung aufweist, die es in Abhängigkeit von den Eigenschaften der wässrigen Lösung ermöglicht, die Lösung aus der Leitung (4) einzuspritzen oder anzusaugen, die Charakterisierungsvorrichtung zwischen dem Mittel zur Demineralisierung (5) und der mindestens einen Einspritzvorrichtung und/oder zwischen dem Mittel zur Demineralisierung (5) und dem Mittel zum Einspritzen und Ansaugen der wässrigen Lösung angeordnet ist, vorzugsweise zwischen dem Mittel zur Demineralisierung (5) und der mindestens einen Einspritzvorrichtung, und die Charakterisierungsvorrichtung mindestens einen Qualitätssensor aufweist, der geeignet ist, die elektrische Leitfähigkeit der wässrigen Lösung und/oder ihre Impedanz zu messen.

2. Einspritzsystem (1) nach dem vorhergehenden Anspruch, derart, dass das Mittel zur Demineralisierung (5) der wässrigen Lösung abnehmbar ist.

3. Einspritzsystem (1) nach einem der vorhergehenden Ansprüche, derart, dass das Mittel zur Demineralisierung (5) der wässrigen Lösung ein lonenaustauscherharz aufweist.

4. Einspritzsystem (1) nach einem der vorhergehenden Ansprüche, derart, dass das Mittel zum Einspritzen und Ansaugen der wässrigen Lösung eine Pumpe mit umkehrbarer Bewegung ist.

5. Einspritzsystem (1) nach einem der vorhergehenden Ansprüche, derart, dass sich das Mittel zum Einspritzen und Ansaugen innerhalb des Behälters (2) befinden.

6. Einspritzsystem (1) nach einem der vorhergehenden Ansprüche, derart, dass die Leitung (4), die den Behälter (2) mit mindestens einer Einspritzvorrichtung und/oder dem Mittel zur Demineralisierung (5) der wässrigen Lösung verbindet, ein Heizmittel aufweist, das geeignet ist, die wässrige Lösung zu erhitzen.

7. Verfahren zum Demineralisieren einer wässrigen Lösung in einem System (1) zum Einspritzen der wässrigen Lösung in einen Einspritzmotor für Kraftfahrzeuge, das die folgenden aufeinanderfolgenden Schritte aufweist:
a. Einspritzen der wässrigen Lösung in eine Leitung (4), die einen Behälter (2) mit mindestens einer Einspritzvorrichtung eines Einspritzmotors verbindet,
b. Demineralisieren der Lösung durch Durchlaufen eines Mittels zur Demineralisierung (5),
c. Messen mindestens eines Merkmals der wässrigen Lösung nach Durchlaufen des Mittels zur Demineralisierung (5),
d. Wenn die Messung des Merkmals der wässrigen Lösung größer als ein Referenzwert ist, Ansaugen der wässrigen Lösung in den Behälter (2),
wobei die gemessene Eigenschaft der wässrigen Lösung eine elektrische Leitfähigkeit und/oder eine Impedanz ist.

8. Verfahren zum Demineralisieren einer wässrigen Lösung in einem System (1) zum Einspritzen der wässrigen Lösung in einen Einspritzmotor für Kraftfahrzeuge nach Anspruch 7, derart, dass es einen Schritt e. aufweist, während dessen die Schritte a, b, c, d n-mal wiederholt werden, wobei n eine ganze Zahl ist, bis die gemessene Eigenschaft kleiner oder gleich dem Referenzwert ist.

9. Verfahren zum Demineralisieren einer wässrigen Lösung in einem System (1) zum Einspritzen der wässrigen Lösung in einen Einspritzmotor für Kraftfahrzeuge nach Anspruch 8, wobei der Schritt e) gestoppt wird, wenn die gemessene Eigenschaft zwischen n-1 und n konstant ist, wobei die Eigenschaft größer als der Referenzwert ist, die Einspritz- und Ansaugmittel dann gestoppt werden und die Mittel zur Demineralisierung ersetzt werden.

## Claims

1. A system (1) for injecting an aqueous solution into an injection engine for motor vehicles, said system comprising a reservoir (2), a means for injecting (3) the aqueous solution, said aqueous solution being injected into a pipe (4) connecting the tank (2) to at least one injector and said pipe (4) comprising a means for demineralizing (5) the aqueous solution,
**characterized in that**
the injection means (3) is also a means of suctioning to the reservoir (2) of the aqueous solution in the pipe (4) connecting the tank (2) to at least one injector and **in that** said pipe (4) comprises a device for characterising the aqueous solution allowing, depending on the characteristics of the aqueous solution, to inject or suck the solution from the pipe (4), said characterization device being located between the demineralization means (5) and the at least one injector and/or between the demineralization means (5) and the means for injection and suction of the aqueous solution, preferably between the demineralization means (5) and the at least one injector, and
the characterization device includes at least one quality sensor capable of measuring the electrical conductivity of the aqueous solution and/or its impedance.

2. An injection system (1) according to the preceding claim, such that the demineralization means (5) of the aqueous solution is removable.

3. An injection system (1) according to any of the preceding claims, such that the means of demineralization (5) of the aqueous solution comprises an ion exchange resin.

4. An injection system (1) according to any of the preceding claims, such that the means for injecting and sucking the aqueous solution is a reversible motion pump.

5. An injection system (1) according to any one of the preceding claims, such that the injection and suction means is located inside the tank (2).

6. An injection system (1) according to any of the preceding claims, such that the pipe (4) connecting the reservoir (2) to at least one injector and/or the means of demineralization (5) of the aqueous solution comprises a heating means capable of heating the aqueous solution.

7. A method for demineralizing an aqueous solution in a system (1) for injecting said aqueous solution into a motor vehicle injection engine comprising the following successive steps:
a. Injection of said aqueous solution into a pipe (4) connecting a tank (2) to at least one injector of an injection engine,
b. Demineralization of said solution by passing through a means of demineralization (5),
c. Measurement of at least one characteristic of the aqueous solution after passing through the demineralization medium (5),
d. If the measurement of the characteristic of the aqueous solution is greater than a reference value, aspiration of the aqueous solution to the tank (2),
in which the characteristic of the aqueous solution being measured is electrical conductivity and/or impedance.

8. A method for demineralizing an aqueous solution in a system (1) for injecting said aqueous solution into a motor vehicle injection engine according to claim 7, such that it comprises a step e. wherein steps a, b, c, d are repeated n times, with n a whole number, until the measured property is less than or equal to the reference value.

9. A method for demineralizing an aqueous solution in a system (1) for injecting said aqueous solution into a motor vehicle injection engine according to claim 8; such that step (e) is stopped if the measured property is constant between n-1 and n, said property being greater than the reference value, then the injection and suction means is stopped and the demineralization means replaced.
